# FASCICULE DE BREVET EUROPEEN

(11) **EP 1 337 793 B1**
(45) Date de publication et mention de la délivrance du brevet: **06.06.2007**
(21) Numéro de dépôt: 01993799.4
(22) Date de dépôt: 09.11.2001
(51) Int. Cl.: F25B 13/00

(54) **SYSTEME REVERSIBLE DE RECUPERATION D'ENERGIE CALORIFIQUE**
UMKEHRBARES SYSTEM ZUR WIEDEREGWINNUNG VON WÄRMEENERGIE
REVERSIBLE SYSTEM FOR RECUPERATING HEAT ENERGY

(30) Priorité: 10.11.2000 FR 0014477
(43) Date de publication de la demande: 27.08.2003
(73) Titulaire: Revel Air, 88100 Saint Die des Vosges (FR)
(72) Inventeur: Colin, Patrick, 88100 Saint Die (FR); Maire, Jean-Luc, 94300 Vincennes (FR)
(74) Mandataire: Metz, Paul
(86) Numéro de dépôt international: PCT/FR2001/003504
(87) Numéro de publication internationale: WO 2002/039033

(56) Documents cités:
- US-A- 5 050 396
- US-A- 5 074 120
- US-A- 5 937 663

## Description

L'invention se rapporte à un système réversible de récupération par prélèvement et transfert d'énergie calorifique entre au moins deux milieux différents par exemple entre l'extérieur et un lieu de vie, de travail, d'entreposage ou tout autre nécessitant un apport de calories ou frigories selon le préambule de la revendication 1. Un tel système est connu du document US-A-5 937 663.

Les besoins en chaleur en période froide d'un lieu de vie, de travail ou autre lieu se résument de façon simple en une quantité de calories consacrée au chauffage de l'air et une autre quantité de calories moins importante consacrée au chauffage de l'eau sanitaire. Cette dernière varie fortement en fonction du nombre de personnes puisant de l'eau chaude sanitaire ou engendrant indirectement un tel besoin.

En été, l'énergie consacrée au chauffage disparaît alors que la quantité d'énergie calorifique consacrée à l'eau sanitaire ne diminue que dans une moindre mesure.

Dans les lieux climatisés, une consommation supplémentaire d'énergie apparaît. Il s'agit de l'extraction des calories des pièces, bureaux ou locaux. Cette quantité de calories extraites est bien souvent perdue car rejetée ou dissipée à l'extérieur des maisons ou des bâtiments.

Ces quantités de calories et de frigories peuvent provenir d'une même source d'énergie, en général l'électricité ou de plusieurs sources de nature différente, par exemple un combustible et une chaudière d'une part et l'électricité et une installation de climatisation d'autre part.

Bien entendu, avec le surenchérissement de l'énergie, diverses solutions d'économie ont été envisagées et appliquées.

Il s'agit de modes et de durées de fonctionnement dépendant du taux d'occupation, de régulation, mais aussi d'économies d'énergie provenant de la récupération ou du puisage de calories dans un milieu extérieur à accès libre et gratuit.

C'est ainsi que les pompes à chaleur sont apparues.

Il s'agit de machines frigorifiques qui transfèrent la chaleur d'un milieu dans un autre en utilisant comme véhicule un fluide frigorifique passant successivement d'un état gazeux à un état liquide et inversement par la succession de phases de compression et de détente.

Pour réaliser en plus la climatisation des pièces, bureaux, locaux ou autres, des ensembles réversibles à pompe à chaleur ont été construits et utilisés (voir le document US-A-5 074 120).

On utilise ainsi actuellement le réseau de chauffage intégré dans les planchers des ensembles de chauffage par le sol pour produire un rafraîchissement de climatisation en été.

Les pompes à chaleur et les ensembles de récupération d'énergie sont caractérisés par un indice appelé coefficient de performances intervenant dans le rendement énergétique de l'installation et donc sur les gains réalisés en s'approvisionnant pour une part dans un milieu de puisage de calories gratuites.

Au fil des années, les compresseurs spécifiques des pompes à chaleur se sont améliorés en fiabilité, en rendement propre et en coût et les installations sont devenues de ce fait plus performantes.

Il en est ainsi également des échangeurs tels que les évaporateurs ou les condenseurs dont le rendement s'est amélioré et dont le coût s'est réduit.

Par contre, concernant les autres parties des ensembles de récupération à pompe à chaleur, seuls des gains mineurs ont pu être obtenus. Ceux-ci ne représentent que de faibles valeurs dans l'amélioration du rendement global, en tout cas insuffisantes pour déclencher un regain d'intérêt pour ce produit et redynamiser le marché.

La présente invention a pour but d'améliorer encore le rendement global des installations de récupération d'énergie calorifique utilisant une pompe à chaleur.

Elle a pour but également d'améliorer ce rendement global dans le cas d'une réalisation réversible dans laquelle les calories sont extraites des pièces et locaux.

Selon l'invention, les calories ne sont plus rejetées à l'extérieur mais utilisées pour d'autres besoins, par exemple le chauffage de l'eau sanitaire, de l'eau d'une piscine ou tout autre besoin de chauffage et même de cuisson.

Le système de récupération et de transfert de chaleur selon l'invention est défini dans la revendication 1.

Le système selon l'invention présente de hautes performances et notamment un excellent rendement.

Comme on le verra ci-après, l'absence de la vanne classique à trois ou quatre voies ainsi qu'un seul compresseur ou un compresseur principal doublé d'au moins un deuxième compresseur utilisé en relève du compresseur principal apportent une amélioration sensible à la diminution des pertes.

Par ailleurs, divers modes spécifiques de commandes de fonctionnement et de régulation améliorent encore le rendement global.

De plus, la présence d'un séparateur spécifique de phase multifonction apporte un surcroît de fiabilité et une amélioration du rendement.

Finalement, la pluralité de vannes calibrées et commandées à distance assurent une souplesse de fonctionnement exceptionnelle aussi bien en mode hiver qu'en mode été.

L'utilisation d'échangeurs à plaques particulièrement performants pour le transfert de l'énergie aux circuits d'utilisation augmente le rendement et la rapidité du transfert.

D'autres caractéristiques et avantages de l'invention apparaîtront dans la description qui suit, donnée à titre d'exemple et accompagnée des dessins dans lesquels :
- la figure 1 est le schéma de base du système selon l'invention ;
- la figure 2 est le schéma de base de l'invention dans la configuration dite d'hiver, c'est-à-dire de consommation d'énergie calorifique en chauffage et en eau chaude sanitaire ;
- la figure 3 est le schéma de base dans sa configuration dite d'été, c'est-à-dire lorsque le circuit de chauffage des pièces et locaux fonctionne en mode de rafraîchissement ;
- la figure 4 est le schéma de base d'un système simplifié pour de petites installations dans sa configuration dite d'hiver ;
- la figure 5 est le schéma de base d'un système simplifié pour de petites installations dans sa configuration dite d'été ;
- la figure 6 est le schéma de base d'un système simplifié à un seul compresseur dans sa configuration dite d'hiver ;
- la figure 7 est le schéma de base d'un système simplifié à un seul compresseur dans sa configuration dite d'été.

Par convention schématique on a représenté les différents états du fluide frigorifique de la façon suivante :
- flèches pleines noires pour le fluide à l'état liquide,
- doubles flèches blanches pour le fluide à l'état gazeux à haute pression,
- simples flèches blanches pour le fluide à l'état gazeux basse pression.

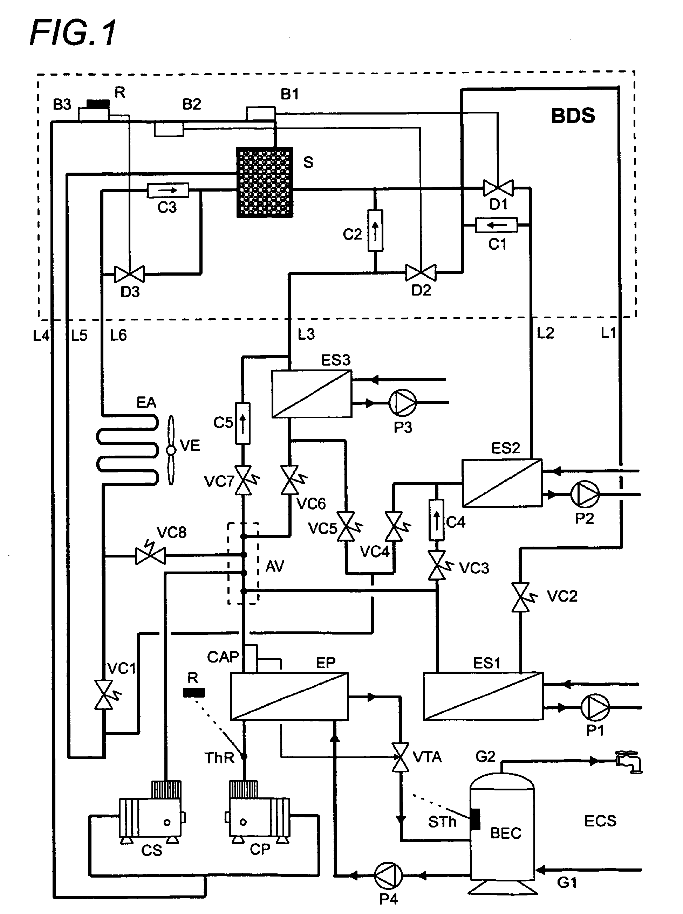

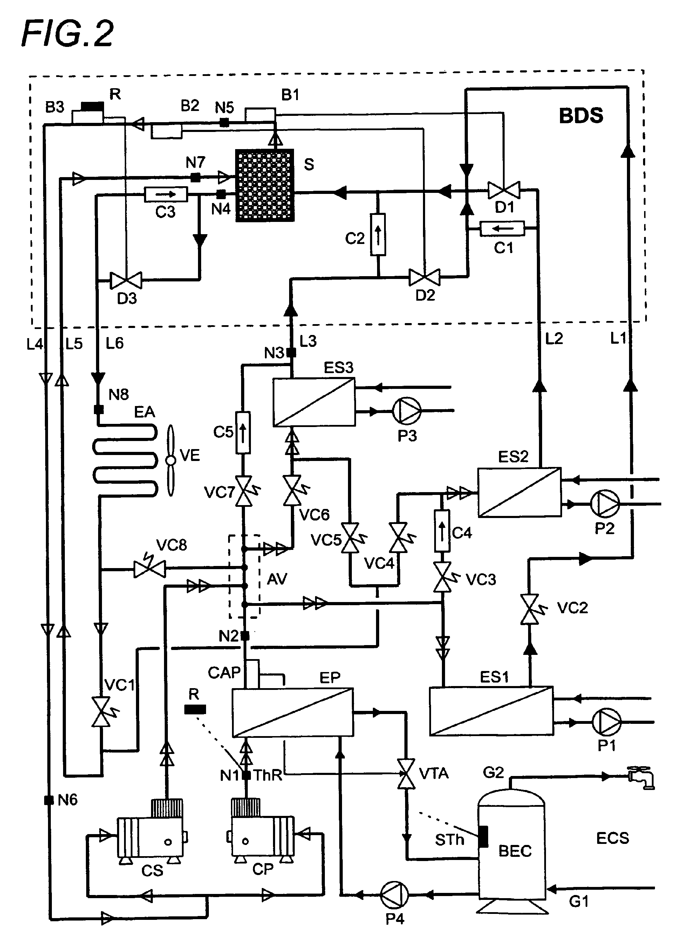

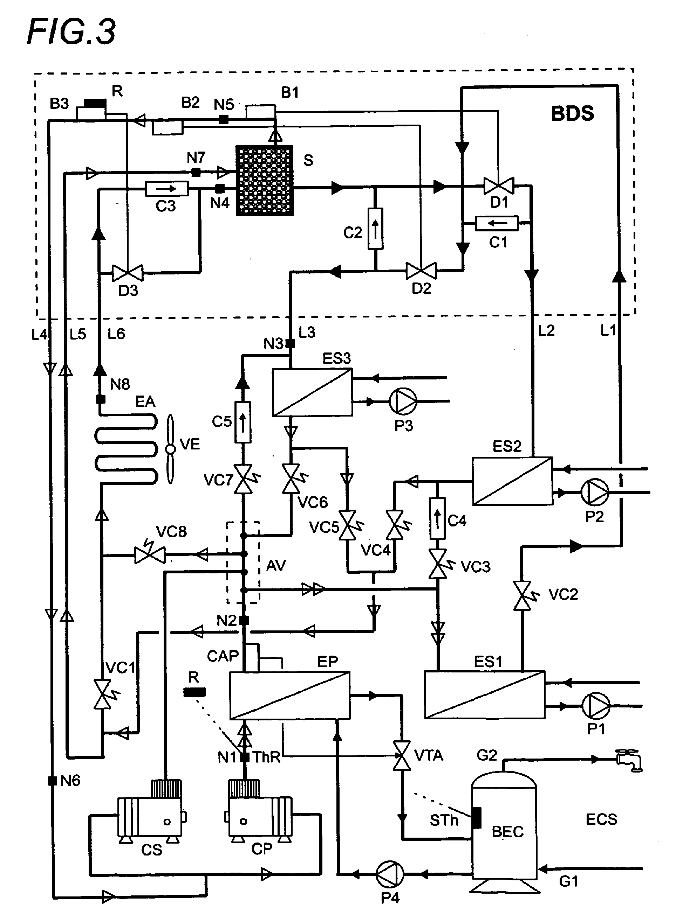

On décrira ci-après tout d'abord la composition du schéma de base du système réversible selon l'invention (figure 1) puis son fonctionnement, d'une part en mode de chauffage uniquement (figure 2) et d'autre part en mode mixte de rafraîchissement et de chauffage de l'eau sanitaire ou autre (figure 3) correspondant à un fonctionnement d'été.

Le système de récupération selon l'invention présente un circuit frigorifique formé d'un échangeur aéraulique réversible EA traversé par un flux d'air envoyé par un ventilateur d'échangeur VE suivi ensuite de différents composants dont une vanne calibrée VC1 commandée à distance, un séparateur de phases S, d'un compresseur principal CP monté en parallèle seul ou avec au moins un compresseur secondaire CS utilisé en relève de ce compresseur principal CP. Le compresseur principal CP alimente un échangeur primaire non réversible EP de désurchauffe avec condensation partielle ou totale pour le transfert de toutes ou une partie des calories vers un circuit d'utilisation en chauffage d'eau sanitaire ECS.

Le seul ou le compresseur principal CP est de taille et de caractéristiques telles pour une installation donnée qu'il n'est pas surpuissant en été sachant qu'en hiver le complément peut être apporté par une autre source d'énergie ou être apporté par le ou les compresseurs secondaires CS.

Les sorties des compresseurs CP et CS sont reliées en un point commun aval AV de l'échangeur primaire EP à partir duquel se développent plusieurs branches correspondant à plusieurs circuits d'utilisation en mode chauffage ou en mode rafraîchissement. Cette connexion est réalisée à ce niveau afin de dévier le flux du ou des compresseurs secondaires CS pour ne pas perdre d'énergie sous la forme d'une chute de pression générée par EP qui serait traversé par un flux gazeux trop important et inutile à ce point.

Trois branches ont été représentées pour illustrer trois possibilités d'utilisation, par exemple pour la première, une utilisation en mode chauffage par des unités terminales non réversibles, par exemple radiateurs, piscine, ventilo-convecteurs, aérothermes, pour la deuxième une utilisation en chauffage/rafraîchissement par des unités terminales réversibles utilisant l'eau chaude ou l'eau froide, par exemple : planchers chauffants, ventilo-convecteurs, aérothermes, et pour la troisième une utilisation identique à la deuxième.

La première branche est constituée d'une liaison directe à un échangeur secondaire, non réversible ES1 avec retour comme représenté à un bloc de détente et de séparation BDS par L1 à travers une vanne calibrée VC2 commandée à distance. Le circuit d'utilisation branché à la sortie du secondaire de cet échangeur ES1 est activé par un circulateur P1 placé sur le circuit d'eau chaude.

La deuxième branche se compose en parallèle d'une part d'un clapet C4 suivi d'une vanne calibrée VC3 commandée à distance provenant du point commun AV et d'autre part d'une autre vanne calibrée VC4 commandée à distance provenant de la sortie de VC1 et aboutissant à l'entrée d'un échangeur réversible ES2. La sortie de ES2 est reliée par L2 au bloc de détente et de séparation BDS. Le circuit d'utilisation du secondaire de ES2 est activé par une pompe P2 montée dans le circuit d'utilisation d'eau chaude.

La troisième branche aboutit à l'entrée d'un autre échangeur secondaire réversible ES3 à partir de deux vannes calibrées commandées à distance, l'une VC5 provenant de VC1 et l'autre VC6 provenant du point commun AV.

Une branche auxiliaire formée d'une vanne calibrée VC7 de dérivation, commandée à distance et suivie d'un clapet C5 est montée en dérivation entre AV et la sortie de ES3. Celle-ci est reliée par L3 au bloc de détente et de séparation BDS. Le circuit d'utilisation de ES3 est activé par une pompe P3 montée dans le circuit d'utilisation.

Une vanne calibrée VC8 d'inversion commandée à distance montée entre l'échangeur aéraulique EA et les échangeurs EP et ES1 permet l'alimentation en calories en mode d'été des échangeurs EP et ES1 ou le dégivrage en mode d'hiver de l'échangeur EA.

Les vannes calibrées VCn commandées à distance sont par exemple du type électrovanne. En raison de leur multiplicité, on peut choisir l'échangeur ESn à alimenter qui correspond au circuit en demande et bénéficier ainsi d'une souplesse et d'une optimisation de fonctionnement exceptionnelles procurant un surcroît d'économie.

On comprend que le nombre de vannes calibrées ainsi que celui des échangeurs n'est pas limité.

Par exemple, l'échangeur réversible ES2 peut fonctionner en mode de rafraîchissement alors que ES3 est en mode de chauffage et ES1 à l'arrêt. Ceci ne constitue qu'un exemple car les combinaisons sont multiples.

En ce qui concerne le circuit de l'eau chaude sanitaire ECS, il est constitué classiquement d'un ballon d'eau chaude BEC dans lequel débite un circuit de chauffage formé d'un circulateur P4 et d'une vanne thermostatique VTA commandée en fonctionnement par un capteur CAP de température disposé en sortie de EP. L'entrée d'eau froide et la sortie d'eau chaude du ballon BEC sont référencées respectivement G1 et G2.

Les schémas des figures 1, 2 et 3 se terminent dans leur partie supérieure par le bloc de détente et de séparation BDS auquel aboutissent les lignes L1, L2 et L3 des branches contenant les échangeurs ES1, ES2 et ES3 et duquel partent ou arrivent trois liaisons L4, L5, L6 respectivement avec d'abord les compresseurs CP et CS, ensuite avec l'entrée et la sortie de l'échangeur aéraulique réversible EA.

Le bloc de détente et de séparation BDS se compose du séparateur de phase S, de trois détendeurs thermostatiques à égalisation externe D1, D2 et D3. D3 est en plus un détendeur électriquement piloté. Il s'agit respectivement pour les deux premiers D1 et D2 de détendeurs en mode été et pour le dernier D3 d'un détendeur en mode hiver ou mixte. Chaque détendeur est dérivé par un clapet anti-retour respectivement C1, C2 et C3. Le détendeur D1 dérivé par son clapet C1 est placé en série sur la sortie par L2 de l'échangeur ES2. Comme représenté, la sortie du détendeur D1 est reliée à D2, à S et à VC2 et donc à ES1 par L1.

La sortie de ES3 arrive par la ligne L3 à l'entrée du détendeur D2 et du clapet anti-retour C2 relié par son autre extrémité à l'unité de séparation de phase S. L'entrée du détendeur D2 est reliée à C1 à l'entrée de D1 et à S.

Les détendeurs D1, D2 et D3 sont des détendeurs thermostatiques. Ils sont régulés par la température mesurée au niveau de leurs bulbes respectivement B1, B2 et B3 par exemple montés comme représenté, en applique sur les conduits du circuit frigorifique dans lesquels circule le fluide frigorifique. Ces bulbes rendent compte de la température du fluide frigorifique au point où ils sont montés.

Le détendeur D3 est un détendeur thermostatique particulier. Sur son bulbe B3 est montée une résistance R de 10 à 50 Watts mise sous tension par un thermostat réglable ThR placé entre CP et EP. Elle est destinée à chauffer le bulbe B3 pour provoquer l'ouverture plus grande du détendeur D3.

On expliquera maintenant le fonctionnement du système de récupération et de transfert de calories selon l'invention en référence aux schémas. Pour plus de clarté et de facilité, on définit ci-après différents points du circuit en utilisant la lettre N suivie d'un chiffre.

Ces points Nn ne figurent que sur les figures 2 et 3 illustrant le fonctionnement respectivement en mode hiver, c'est-à-dire de chauffage et en mode été, c'est-à-dire de rafraîchissement et de chauffage de l'eau sanitaire ou autre non utilisée en chauffage.

On distingue ainsi les points N1 et N2 situés respectivement à la sortie du compresseur principal CP et à la sortie de l'échangeur primaire EP au voisinage de CAP.

On peut identifier ensuite les points suivants :
- N3 à la sortie de l'échangeur ES3 en aval de la jonction avec la branche VC7-C5,
- N4 à l'entrée/sortie du séparateur de phases S sur la ligne L6,
- N5 entre les bulbes B1 et B2
- N6 sur la ligne L4 entre B3 et l'entrée des compresseurs CP et CS,
- N7 à l'entrée/sortie du séparateur de phases S sur la ligne L5,
- N8 à l'entrée/sortie de l'échangeur EA sur la ligne L6.

Tous ces points marquent les endroits caractéristiques du circuit pour faciliter la description du fonctionnement.

L'explication du fonctionnement du système de récupération d'énergie calorifique selon l'invention nécessite deux développements descriptifs spécifiques, un pour chacun de ses deux modes principaux de fonctionnement, à savoir : le mode de chauffage seul (régime d'hiver), le mode mixte sans chauffage mais avec rafraîchissement (régime d'été).

Le principe de fonctionnement est identique pour diverses puissances et indépendant du nombre d'échangeurs, de compresseurs ou de la nature ou de l'étendue du milieu extérieur de récupération ou d'évacuation et du milieu d'apport.

Le principe de fonctionnement est en particulier valable dans le cas d'un seul compresseur.

### Régime d'hiver :

Le régime d'hiver implique le chauffage des pièces et locaux et celui de l'eau sanitaire.

De façon classique, des calories sont prélevées par exemple dans l'air par l'intermédiaire de l'échangeur aéraulique réversible EA remplissant la fonction d'évaporateur, pour être transférées dans les circuits d'utilisation.

Pour ce faire, on utilise comme véhicule un fluide frigorifique dont un premier changement d'état permet d'emporter une masse de calories prélevées dans un milieu exportateur pour être transférées dans un milieu récepteur par des circuits d'utilisation à partir des échangeurs avec ce fluide frigorifique.

Le régime hiver correspond aux états constants suivants :
- les détendeurs D1 et D2 sont fermés,
- EA fonctionne en évaporateur noyé,
- le ballon d'eau chaude BEC est traversé par de l'eau de réchauffage avec limitation de la condensation partielle dans EP par VTA.
- au moins un des échangeurs ES1, ES2, ES3 fonctionne.

Si l'un quelconque des échangeurs EP, ES1, ES2, ES3 est en demande de calories, le compresseur principal CP sera mis en fonctionnement en même temps que le circulateur P4 de chauffage de l'eau sanitaire.

Si la puissance du compresseur principal CP est insuffisante, un ou des compresseurs secondaires CS sont appelés en relève en fonction des besoins ou une source extérieure de calories.

Le besoin du moment est connu par la détection d'un manque de puissance défini par un écart trop important entre la température d'eau calculée et la température de l'eau produite.

Si l'échangeur EP est en demande de calories, CP, P4 et VE sont en fonctionnement. La vanne calibrée VC7 n'est ouverte que si EP est le seul échangeur en fonctionnement.

Concernant le circuit de chauffage de l'eau sanitaire, VTA maintiendra la température de l'eau de chauffage du ballon BEC à une valeur minimale par exemple de 45°C. Le bulbe ou capteur CAP de cette vanne VTA est placé sur la tuyauterie de sortie du primaire de EP pour optimiser la fonction de désurchauffeur de cet échangeur traversé par le flux gazeux haute pression provenant uniquement du compresseur CP. VC1 est ouverte pour autoriser la récupération des calories provenant de EA par les lignes L5, L4.

Les autres échangeurs peuvent être en demande de calories.

Si ES1 est en demande de calories, CP, P1 et VE sont en fonctionnement. VC2 est ouverte pour permettre la réception des calories dans l'échangeur ES1 provenant de EP. ES1 est traversé par le flux gazeux haute pression comprimé par CP et éventuellement CS. ES1 reçoit un flux gazeux plus ou moins désurchauffé ou condensé partiellement en fonction de la demande en calories au niveau du secondaire de EP, c'est-à-dire de la demande en calories du circuit primaire de chauffage de l'eau sanitaire contenant VTA et P4.

Si l'échangeur ES2 est en demande de calories, CP, P2 et VE sont en fonctionnement, et VC3 est ouverte pour que ES2 reçoive le fluide frigorifique gazeux comprimé et assure l'apport en calories.

L'échangeur EP désurchauffe le flux gazeux haute pression, voire génère une condensation partielle du flux en fonction de la régulation en demande par VTA. VC1 est ouverte pour permettre l'apport des calories en provenance de EA.

Lorsque l'échangeur ES3 est en demande de calories, alors CP, P3 et VE sont en fonctionnement et VC6 est ouverte pour autoriser le flux gazeux du fluide frigorifique à pénétrer dans l'échangeur ES3.

L'échangeur principal EP est traversé par le flux gazeux frigorifique haute pression qu'il désurchauffe voire condense partiellement en fonction des besoins caloriques.

Ce phénomène est limité à une température par exemple de 45°C qui ne correspond pas obligatoirement à une condensation totale.

Dans tous les cas, pour ce régime, le flux frigorifique, après être passé par le séparateur de phase S, est détendu par D3 en fonction de la température mesurée au niveau de son bulbe B3, D1 et D2 étant fermés.

VC7 est fermée systématiquement si l'un des échangeurs ES1, ES2, ou ES3 est en demande de calories.

Si la température du fluide frigorifique gazeux dépasse par exemple 90°C au niveau du point N1, la résistance électrique R d'excitation supplémentaire du bulbe B3 d'une puissance de 10 à 50 W sera mise sous tension par un circuit de commande actionné par un thermostat réglable ThR placé en N1.

Cette fonction a pour but de conserver le fonctionnement des compresseurs sur une plage de températures raisonnables sur laquelle le rendement est optimal.

Le chauffage du bulbe B3 provoquera l'ouverture plus grande du détendeur D3 ce qui entraînera une chute de la température du fluide frigorifique gazeux au niveau de N1 afin de conserver l'installation dans les limites d'un fonctionnement normal.

Cette fonction est innovante car elle permet de conserver une surchauffe faible au niveau de N1 même dans le cas d'une compression augmentée par une température extérieure faible et une demande élevée en calories par le circuit d'eau chaude et ceci avec un réglage identique du détendeur.

### Fonction du séparateur de phases S :

Le séparateur de phases S tel qu'utilisé ici est un composant spécialement construit pour ce montage. Il remplit les quatre fonctions principales suivantes :
- il assure d'abord par gravité l'alimentation des détendeurs en fluide frigorifique à l'état liquide ;
- il augmente la quantité de fluide à l'état liquide dans l'échangeur aéraulique réversible EA en refroidissant le liquide au point N4, c'est-à-dire avant son entrée dans le détendeur D3, en évaporant le liquide non encore évaporé et en augmentant la surchauffe du fluide au point N5 par des échanges thermiques entre le liquide à haute pression qui est chaud et le flux de fluide à 90°C à basse pression qui est froid. L'échangeur EA peut ainsi fonctionner en échangeur noyé ;
- le fait de disposer d'un fluide frigorifique non évaporé au point N7 à l'entrée de S, grâce à la capacité d'échange de S permettant l'évaporation du liquide froid restant, augmente le rendement de EA en tant qu'évaporateur car il contient ainsi plus de fluide à l'état liquide. On augmente aussi le débit massique du fluide traversant VC1 pour une même chute de pression à ce niveau car une partie du flux est liquide. Les pertes à ce niveau deviennent ainsi négligeables ;
- il permet de disposer d'une réserve de volume nécessaire au stockage ou au déstockage du fluide à l'état liquide pour compenser les différents modes de fonctionnement de l'installation ;
- il permet d'éviter, ou au moins de limiter les arrivées de fluide à l'état liquide à l'aspiration des compresseurs grâce à son inertie thermique provenant de sa taille et de sa conception, - tout en conservant une surchauffe très faible au niveau de l'évaporateur. Cette surchauffe définie comme la différence de température entre N4 et N5 sera établie à la valeur la plus faible possible par un réglage approprié de la commande du détenteur. On vise par exemple une surchauffe de 10°C.

On comprend tout l'intérêt de la présence de ce séparateur de phases S dans le circuit du fluide frigorifique dont la présence constitue à la fois une bouteille anti-coup de bélier, un échangeur de chaleur entre le liquide à haute pression et le gaz à basse pression pour l'augmentation du rendement de l'échangeur aéraulique réversible EA, une protection pour les compresseurs CP et CS et un réservoir de liquide biflux.

Ce séparateur de phases S est à tube plongeur dans une réserve de fluide liquide. Dans une réalisation préférentielle, la section de son tube plongeur est plus importante que le conduit d'arrivée pour optimiser les échanges thermiques et permettre l'évaporation des dernières gouttes de fluide frigorifique contenues dans le fluide gazeux basse pression.

### Régime d'été (figure 3) :

Le régime d'été utilise le caractère réversible du système car il y a lieu dans cette période climatique de rafraîchir les pièces et locaux. Le régime est mixte car le chauffage de l'eau sanitaire subsiste ainsi qu'éventuellement totalement ou partiellement celui de l'eau de la piscine.

Il se caractérise par :
- l'inversion du flux dans les échangeurs secondaires réversibles,
- le fonctionnement des détendeurs D1 et D2,
- le fonctionnement de EA en condenseur,
- le fonctionnement d'au moins un des échangeurs secondaires réversibles en évaporateur.

### Cas particulier : eau chaude sanitaire uniquement

Dans ce cas, aucun des échangeurs secondaires ES1, ES2 et ES3 n'est traversé par le fluide frigorifique, soit que le flux est dérivé, soit que la vanne en série sur le circuit d'entrée est fermée.

Seul l'échangeur principal EP fonctionne. Si la température dans le ballon d'eau chaude sanitaire BEC donnée par sa sonde thermostatique STh arrive en dessous de la température de consigne, le circulateur P4 du circuit de chauffage se met en fonctionnement ainsi que le compresseur principal CP.

Le ventilateur VE de l'échangeur aéraulique EA démarre en même temps que CP.

CP refoule le fluide frigorifique à l'état de gaz chaud et sous haute pression, par exemple 20 bars soit 70°C.

On dispose en N1, c'est-à-dire à l'entrée de EP, d'un gaz surchauffé qui se désurchauffe puis se condense dans le primaire de l'échangeur EP et transmet sa chaleur à l'eau du circuit de chauffage contenant VTA et P4.

Dans ce cas, il n'existe aucun circuit supplémentaire d'utilisation des calories, on peut donc se permettre une condensation totale dans l'échangeur EP. Le fluide frigorifique se liquéfie et on récupère en plus la chaleur de condensation.

Cependant, même si la condensation est totale, il peut rester des bulles dans le liquide sortant qui sera traité par le séparateur de phase S qui fonctionne par gravité après traversée de VC7, C5 et C2.

Le liquide passe ensuite dans le détendeur D3 d'où il ressort en phase liquide + vapeur pour entrer dans l'échangeur EA où il est évaporé.

Dans tout ce système de récupération, on cherche à être faible en différence de température du milieu extérieur, en général de l'air, entre les deux faces de la batterie de l'échangeur extérieur réversible EA, par exemple 3°C, et on cherche à être fort en débit.

Il en résulte l'avantage important d'un dégivrage moins fréquent au niveau de l'échangeur EA car on déshumidifie moins que dans un système classique.

On peut indiquer qu'au maximum trois dégivrages par jour sont nécessaires même quand il fait très froid.

La boucle de régulation du circuit de chauffage comportant VTA et P4 permet d'établir un niveau de désurchauffe et de condensation dans EP fonction de la moyenne du besoin.

La régulation par R à partir de ThR joue également son rôle en limitant la température du fluide frigorifique gazeux à la sortie du compresseur CP.

### Cas général :

Il s'agit du cas mixte où l'on rafraîchit les pièces et locaux et où la demande d'eau chaude se poursuit.

On utilise :
- EP pour l'eau chaude sanitaire,
- ES1 échangeur non réversible pour chauffer l'eau à un autre usage, par exemple celle de la piscine,
- ES2 et/ou ES3 échangeurs réversibles pour le rafraîchissement des pièces et locaux.

Dans le cas où ES2 est en demande de frigories, CP est en fonction et les vannes VC8 et VC4 sont ouvertes. Le flux de fluide frigorifique gazeux et à haute pression traverse EP où une désurchauffe et éventuellement une condensation partielle ou totale se produisent si l'eau sanitaire est à une température inférieure à la température de consigne à l'intérieur du ballon BEC, puis le flux traverse EA via VC8. A ce niveau VE ne sera en fonction que si la température mesurée en N2 est supérieure à une température prédéterminée par exemple 65°C. Dans ce cas, les besoins en calories au niveau de EP et/ou de ES1 sont nuls.

Après condensation dans EA, le, flux traverse S via C3 à l'état liquide puis traverse D1 où il est détendu. ES2 est traversé par le fluide frigorifique liquide à basse température qui s'évapore, puis ce flux sous forme gazeuse traverse VC4 pour être aspiré par CP après passage dans S.

Dans le cas où ES3 est en demande de frigories, CP est en fonction et les vannes VC8 et VC5 sont ouvertes. Le flux du fluide frigorifique gazeux et à haute pression traverse EP où une désurchauffe et éventuellement une condensation partielle ou totale se produiront si l'eau sanitaire est à une température inférieure à la température de consigne par exemple 65°C, puis le flux traverse EA via VC8. A ce niveau, VE ne sera en fonction que si la température mesurée à N2 indique une température supérieure à la valeur prédéterminée choisie. Dans ce cas, les besoins en calories au niveau de EP et/ou de ES1 sont nuls.

Le flux traverse S via C3 à l'état liquide puis traverse D2 où il est détendu. ES3 est traversé par le fluide frigorifique liquide à basse température qui s'évapore. Puis ce flux sous forme gazeuse traverse VC5 pour être aspiré par CP après passage dans S.

Dans le mode rafraîchissement décrit ci-dessus, ES1 récupère l'énergie calorifique du système si la vanne VC2 est ouverte. Cette dernière n'est ouverte que si le thermostat qui la pilote est en demande de calories.

ES1 récupérera les calories restantes du flux sortant de EP dans le cas où ES1 est en demande de calories, la vanne VC8 étant alors fermée et VE non commandé en fonction.

A titre d'exemple, en été l'eau dans le circuit du plancher est au minimum à 18°C et dans le primaire de ES2 ou ES3 la température d'évaporation est d'environ 12°C.

En été, le rendement est bon et on n'a besoin que du compresseur principal CP.

Le système est particulièrement économique car les calories extraites dans les pièces et locaux ne sont que partiellement rejetées à l'extérieur par EA, la différence servant aux besoins de chauffage de l'eau sanitaire ou de l'eau de la piscine.

### Dégivrage :

L'échangeur aéraulique EA utilisé comme évaporateur en mode hiver peut givrer, c'est-à-dire se couvrir d'une couche de glace. La glace étant un bon isolant thermique, la carapace de glace constitue un handicap sérieux pour le bon fonctionnement de l'échangeur.

Il y a donc lieu de procéder au dégivrage dès que la glace recouvre les structures extérieures de l'échangeur extérieur EA.

Pour dégivrer, on coupe le compresseur CP, on ferme toutes les vannes et on éteint le ventilateur VE.

On ouvre VC8 vanne d'inversion pendant une faible durée (environ une minute).

La totalité du fluide frigorifique à l'état gazeux va se condenser au point le plus froid du circuit, c'est-à-dire sur les parois intérieures de l'échangeur EA.

Le dégivrage commence mais reste insuffisant.

On passe ensuite en mode de rafraîchissement. Pour ce faire, on réinverse le cycle pour utiliser la chaleur du chauffage ce qui assure la totalité du dégivrage.

Un cycle complet de dégivrage ne dure pas plus de trois minutes et pas plus de trois dégivrages sont nécessaires même par grand froid.

### Variante simplifiée :

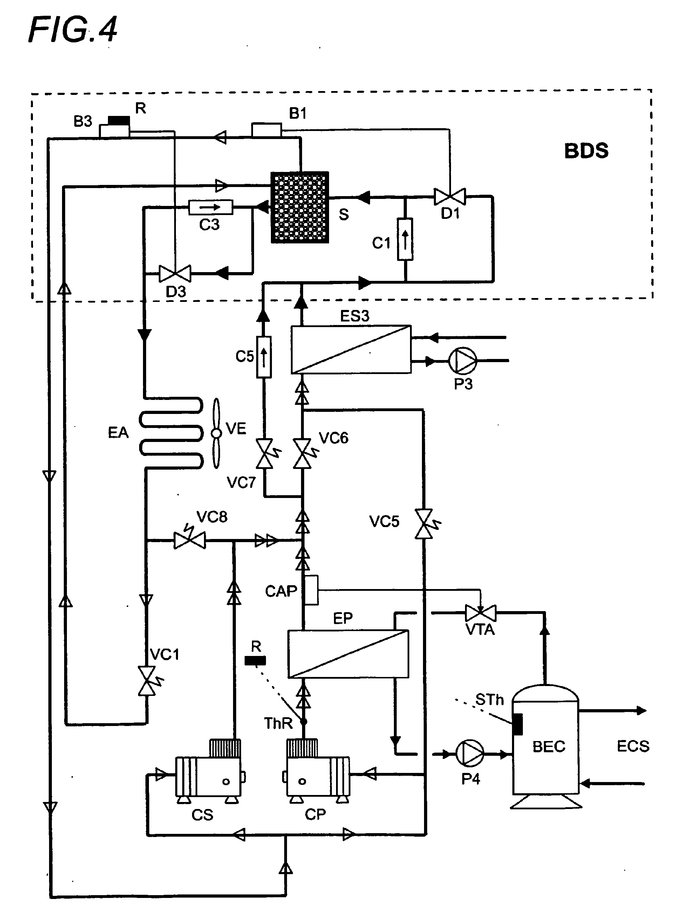

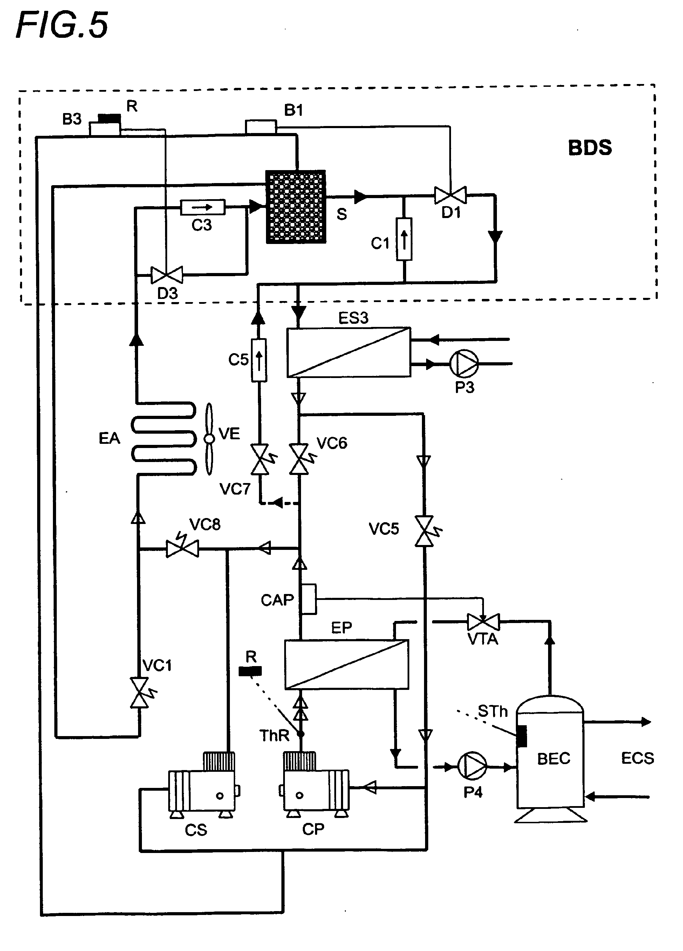

Les figures 4 et 5 concernent une variante simplifiée pour une petite installation par exemple celle prévue pour une petite habitation monofamille du type pavillon.

Elle comporte les éléments et composants essentiels à savoir :
- l'échangeur réversible aéraulique EA avec le milieu extérieur et son ventilateur VE,
- un compresseur principal CP et éventuellement un compresseur secondaire CS utilisé en relève de CP,
- un échangeur principal EP non réversible pour le transfert des calories vers un circuit d'utilisation en chauffage de l'eau sanitaire ECS dans un ballon BEC avec sonde de température STh par un circuit renfermant un circulateur P4 et une vanne thermostatique VTA pilotée par un capteur CAP placé à la sortie de l'échangeur EP,
- un seul échangeur secondaire ES3 réversible ou non alimentant un circuit de chauffage des pièces et locaux par un circulateur P3,
- un bloc de détente et de séparation BDS comportant un séparateur de phases S et deux détendeurs thermostatiques D1 et D3 à bulbes thermosensibles B1 et B3 dérivés par des clapets anti-retour C1 et C3, l'un d'été D1 en régime d'inversion et l'autre D3 d'hiver en chauffage,
- les vannes calibrées suivantes :
   - VC1 vanne principale,
   - VC5 vanne de retour,
   - VC6 vanne d'échangeur de chauffage,
   - VC7 vanne de dérivation,
   - VC8 d'inversion.

Le fonctionnement est lui aussi simplifié.

### Fonctionnement d'hiver :

En régime de fonctionnement d'hiver (figure 4), l'échangeur EA fonctionne en évaporateur, le ou les compresseurs CP, CS reçoi(ven)t le fluide frigorifique évaporé à travers VC1, celui-ci traverse le séparateur de phases S et est comprimé, par exemple à 20 bars, soit 70°C, par CP avec éventuellement l'aide de CS. Il traverse ensuite le primaire de l'échangeur EP où il se désurchauffe et se condense plus ou moins partiellement en fonction des besoins exprimés par le thermostat STh du ballon BEC commandant la vanne VTA du circuit à partir de CAP..

Le fluide désurchauffé et condensé partiellement va poursuivre sa condensation dans le primaire de l'échangeur réversible ES3 passant à travers VC6 en vue de transférer le reste des calories qu'il transporte dans un circuit d'utilisation en chauffage par exemple par l'intermédiaire d'un circulateur P3.

Le fluide frigorifique condensé traverse ensuite le séparateur de phases S du bloc de détente et de séparation BDS en passant par C1, pour se détendre dans D3 et revenir à l'état liquide et détendu dans l'échangeur aéraulique EA où il s'évapore en emportant la quantité de chaleur correspondant à ses caractéristiques dimensionnelles et de fonctionnement.

A cet effet, il est prévu de fonctionner en utilisant une différence de température assez faible entre les deux faces de l'échangeur EA pour rendre le dégivrage moins fréquent.

Le fluide frigorifique à l'état gazeux arrive à l'entrée des compresseurs par VC1 et circule dans le circuit comme précédemment indiqué.

Le bulbe B3 de D3 peut être chauffé par une résistance R de faible puissance à partir des valeurs de température du fluide frigorifique à la sortie du compresseur principal CP, le transformant ainsi en un détendeur thermostatique à égalisation externe pour une température du fluide frigorifique à la sortie de CP qui dépasse un seuil prédéterminé par exemple 90°C.

On dispose ainsi d'une régulation supplémentaire par écrêtage.

### Fonctionnement d'été :

En régime de fonctionnement d'été (figure 5), la production d'eau chaude et la régulation de son circuit de chauffage s'effectuent de la même façon que précédemment.

Le fluide évaporé provient de la sortie de l'échangeur réversible ES3 à travers VC5 et alimente le seul compresseur CP en fonctionnement.

En effet, la fonction de rafraîchissement des pièces et locaux implique le passage des calories du secondaire de l'échangeur ES3 vers son primaire et ainsi son transfert dans le circuit frigorifique.

Cet échangeur ES3 fonctionnant en évaporateur emporte les calories par le fluide frigorifique sortant à l'état gazeux pour être comprimé dans CP et servir au chauffage de l'eau sanitaire.

Si les besoins en chauffage de l'eau sanitaire sont satisfaits, on ne prélève plus de calories par EP. Le fluide frigorifique gazeux va alors se condenser dans l'échangeur extérieur EA par VC8. Ressortant liquide de EA, et traversant S, en passant par C3, il est détendu par son passage dans D1.

Il revient à l'état liquide après le passage dans le séparateur de phases S dans le primaire de l'échangeur ES3 où il s'évapore en emportant des calories et revient à l'entrée de CP par VC5 car VC6 est fermée.

Le système peut fonctionner en circuit court lorsque la demande en calories du circuit d'eau chaude sanitaire ECS est forte, c'est-à-dire sans utiliser l'échangeur extérieur EA en dégagement de chaleur. Dans ces conditions, toutes les calories récupérées par ES3 sont utilisées et il s'avère inutile de les évacuer à l'extérieur par EA.

Dans ce cas, les conditions de fonctionnement sont telles que le fluide frigorifique est condensé entièrement dans le primaire de EP d'où il ressort à l'état liquide, traverse VC6, arrive liquide à l'entrée du primaire de ES3 et traverse S, où il s'évapore et retourne à l'entrée du compresseur CP.

Ou bien, le fluide frigorifique passe par le séparateur de phases S avant son entrée dans le primaire de ES3, ceci afin de le purifier des éventuelles bulles gazeuses.

Cette réalisation simplifiée correspond bien aux besoins d'une habitation monofamille du type pavillon.

### Variante à un seul compresseur :

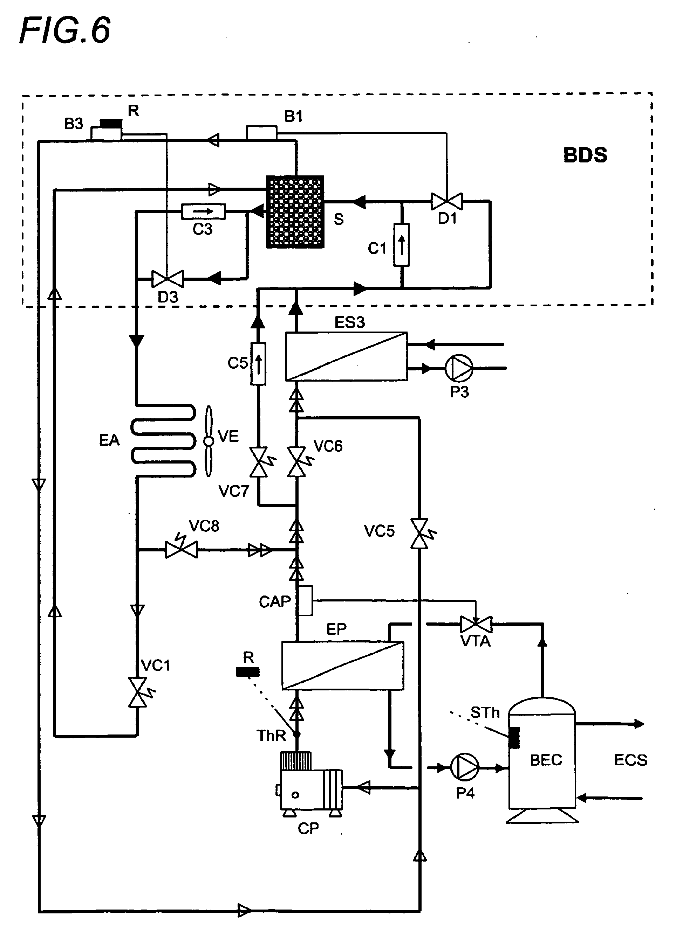

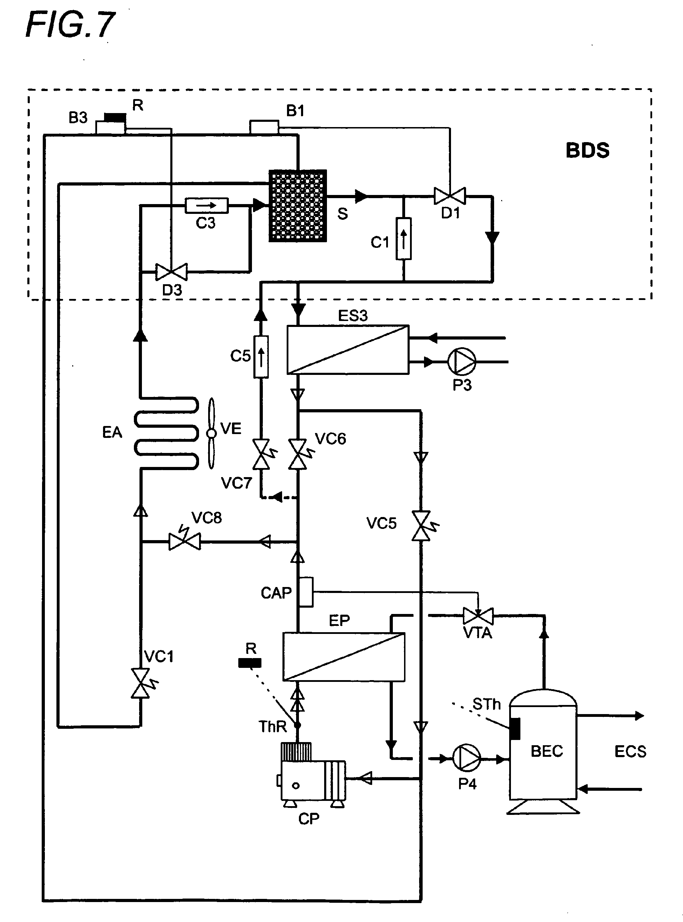

Dans le cas d'une variante à un seul compresseur, représentée sur les figures 6 et 7, le schéma reste quasi identique à celui des figures 4 et 5. Il est simplifié par l'absence du compresseur CS. Cette variante n'est pas couverte par les revendications.

Le fonctionnement est lui aussi quasi identique.

Il ne diffère que par l'absence d'un compresseur secondaire CS.

On se reportera donc au développement descriptif ci-dessus.

Il est possible d'imaginer encore plus simple, un système non réversible où la vanne d'inversion n'existe pas.

## Revendications

1. Système réversible de récupération et de transfert de calories à haut rendement pour le chauffage de l'eau sanitaire de l'eau d'une piscine et le chauffage et la climatisation des pièces, bureaux et locaux ou autres lieux mettant en oeuvre une pompe à chaleur présentant un circuit frigorifique dans lequel circule un fluide frigorifique à l'état liquide ou gazeux formé d'un échangeur réversible extérieur avec un milieu extérieur de prélèvement ou de fourniture de calories, d'au moins un compresseur (CP, CS), d'au moins un détendeur (D1, D2, D3) et de divers circuits d'utilisation à partir d'échangeurs intérieurs, le système réversible de récupération et de transfert de calories à haut rendement **caractérisé en ce que** il comporte également :
• au moins un compresseur principal(CP)complété, en cas de besoin, par au moins un compresseur secondaire (CS) utilisé en relève du compresseur principal (CP),
• un échangeur intérieur principal (EP) non réversible pour le chauffage de l'eau sanitaire disposé à la sortie du compresseur principal (CP);
• des échangeurs intérieurs secondaires (ES1, ES2, ES3) disposés en étages dont au moins un échangeur réversible pour la fourniture ou le prélèvement de calories à ou d'un circuit d'utilisation,
• un bloc de détente et de séparation(BDS) comportant un séparateur de phases (S) réunissant les fonctions de bouteille anti-coup de bélier, d'échangeur de chaleur entre le liquide à haute pression et le gaz à basse pression, une fonction de réservoir de liquide bi-flux et ensuite au moins deux détendeurs dont un détendeur (D3) pour le régime d'hiver et finalement au moins un autre détendeur (D1) ou (D2) pour le régime inversé d'été,
• un échangeur réversible extérieur EA placé dans le circuit frigorifique comme source ou évacuation de calories et dans un milieu extérieur de prélèvement ou de fourniture de calories,
• une pluralité de vannes calibrées (VCn) commandées à distance pour isoler les branches de circuits en vue du fonctionnement réversible.

2. Système réversible selon la revendication 1, **caractérisé en ce que** le détendeur (D3) est un détendeur thermostatique à égalisation externe dont l'élément thermosensible ou bulbe (B3) est placé en contact avec le conduit alimentant les compresseurs en fluide frigorifique et réchauffé par une résistance électrique (R) commandée par un capteur thermique (ThR) si la température du fluide frigorifique en sortie du compresseur principal (CP) est supérieure à une certaine valeur de consigne.

3. Système réversible selon la revendication précédente, **caractérisé en ce que** la valeur de consigne de la commande du détendeur thermostatique (D3) par la résistance (R) est d'environ 90°C.

4. Système réversible selon l'une quelconque des revendications précédentes, **caractérisé en ce que** le circuit secondaire de l'échangeur principal (EP) alimente un circuit de chauffage de l'eau sanitaire dans un ballon (BEC).

5. Système réversible selon la revendication précédente, **caractérisé en ce que** le circuit de chauffage de l'eau sanitaire chauffant (BEC) comporte une vanne thermostatique réglable pilotée (VTA) à partir de la température de l'eau chaude sanitaire et un circulateur (P4), le circuit traversant le ballon (BEC).

6. Système réversible selon la revendication précédente, **caractérisé en ce que** la vanne (VTA) est pilotée par un capteur thermique qui mesure la température de l'eau sanitaire dans le ballon (BEC).

7. Système réversible selon l'une quelconque des revendications précédentes, **caractérisé en ce que** l'échangeur extérieur est un échangeur aéraulique (EA) placé dans un flux d'air crée par un ventilateur (VE).

8. Système réversible selon la revendication précédente, **caractérisé en ce que** la différence de température du flux d'air avant et après l'échangeur (EA) est faible.

9. Système réversible selon la revendication précédente, **caractérisé en ce que** la différence de température du flux d'air est de l'ordre de quelques degrés centigrades.

10. Système réversible selon l'une quelconque des revendications 7 à 9, **caractérisé en ce que** l'échangeur aéraulique (EA) est un échangeur réversible constituant selon le cas un évaporateur ou un condenseur.

11. Système réversible selon l'une quelconque des revendications 7 à 10, **caractérisé en ce que** l'échangeur aéraulique est utilisé en hiver en évaporateur noyé.

12. Système réversible selon l'une quelconque des revendications précédentes, **caractérisé en ce que** le séparateur de phases (S) est de taille et de conception telles qu'il présente une inertie thermique permettant d'éviter ou de limiter les arrivées de fluide frigorifique à l'état liquide à l'aspiration du ou des compresseurs.

13. Système réversible selon l'une quelconque des revendications précédentes, **caractérisé en ce que** le séparateur de phases (S) est à tube plongeur dans une réserve de fluide liquide.

14. Système réversible selon la revendication précédente, **caractérisé en ce que** la section du tube plongeur du séparateur de phases (S) est plus importante que le conduit d'arrivée pour optimiser les échanges thermiques et permettre l'évaporation des dernières gouttes de fluide frigorigène contenues dans le fluide gazeux basse pression.

15. Système réversible selon l'une quelconque des revendications précédentes, **caractérisé en ce que** le compresseur principal (CP) est prioritaire, le ou les compresseur(s) secondaire(s) (CS) étant appelé(s) en complément.

16. Système réversible selon l'une quelconque des revendications précédentes, **caractérisé en ce que** la taille et les caractéristiques du compresseur principal (CP) sont telles, pour une installation donnée, qu'il n'est pas surpuissant en été étant complété par un ou des compresseur(s) secondaire(s) (CS) en hiver.

17. Système réversible selon l'une quelconque des revendications précédentes, **caractérisé en ce que** le compresseur principal (CP) est le seul compresseur de l'installation, l'énergie étant éventuellement complétée par un apport d'énergie calorifique provenant d'un autre moyen.

18. Système réversible selon l'une quelconque des revendications précédentes, **caractérisé en ce que** l'échangeur principal (EP) est utilisé en désurchauffeur avec condensation partielle ou totale.

## Claims

1. A high-yield reversible system for recuperating and transferring heat for heating domestic water and pool water and heating and cooling rooms, offices and premises or other places, implementing a heat pump comprising a refrigerating circuit in which a refrigerant in the liquid or gaseous state circulates, formed of an external reversible exchanger with outside removal or provision of heat, at least one compressor (CP, CS), at least one expansion valve (D1, D2, D3) and various power circuits from internal exchangers, the high-yield, reversible system for recovering and transferring heat **characterized in that** the system also comprises:
• at least one main compressor (CP) supplemented, if needed, by at least one secondary compressor (CS) used as a spare for the main compressor (CP),
• a main, non-reversible interior exchanger (EP) for heating domestic water disposed at the output of the main compressor (CP);
• secondary interior exchangers (ES1, ES2, ES3) disposed in stages, at least one of which is a reversible exchanger for removing or providing heat from or to a power circuit,
• an expansion and separation unit (BDS) comprising a phase separator (S) gathering the functions of a water hammer accumulator, heat exchanger between high-pressure liquid and low-pressure gas, as a function of a bi-flux liquid reservoir and then at least two expansion valves, wherein one expansion valve (D3) is for the winter regime and lastly at least one other expansion valve (D1) or (D2) for the reverse summer regime,
• an external reversible exchanger (EA) placed inside the refrigerating circuit as a source or evacuation of heat and outside for removing or providing heat,
• a plurality of remote-controlled calibrated valves (VCn) to insulate the circuit branches in view of the reversible operation.

2. Reversible system according to claim 1, **characterized in that** the expansion valve (D3) is an external equilizer valve whose thermosensitive element or bulb (B3) is placed in contact with the conduit supplying the compressors with refrigerant and reheated by electrical resistance (R) controlled by a temperature sensor (ThR) if the temperature of the refrigerant on output from the main compressor (CP) is greater than a certain set point.

3. Reversible system according to the previous claim, **characterized in that** the set point for controlling the thermostatic expansion valve (D3) by the resistor (R) is approximately 90°C.

4. Reversible system according to any one of the previous claims, **characterized in that** the secondary circuit of the main exchanger (EP) supplies a heating circuit with domestic water in a tank (BEC).

5. Reversible system according to the previous claim, **characterized in that** the hot water tank (BEC) heating circuit comprises an adjustable thermostatic valve (VTA) controlled by the temperature of the hot domestic water and an accelerator (P4), the circuit crossing the tank (BEC).

6. Reversible system according to the previous claim, **characterized in that** the valve (VTA) is controlled by a temperature sensor that measures the temperature of the domestic water in the tank (BEC).

7. Reversible system according to any one of the previous claims, **characterized in that** the external exchanger is an aeraulic exchanger (EA) placed in a flow of air generated by a fan (VE).

8. Reversible system according to the previous claim, **characterized in that** the difference in temperature of the air flow before and after the aeraulic exchanger (EA) is low.

9. Reversible system according to the previous claim, **characterized in that** the difference in temperature of the air flow is on the order of several degrees centigrade.

10. Reversible system according to any one of claims 7 to 9, **characterized in that** the aeraulic exchanger (EA) is a reversible exchanger comprising as the case may be an evaporator or a condenser.

11. Reversible system according to any one of claims 7 to 10, **characterized in that** the aeraulic exchanger is utilized in winter as a flooded evaporator.

12. Reversible system according to any one of the previous claims, **characterized in that** the phase separator (S) is of a size and design such that the phase separator presents thermal inertia allowing the supply of refrigerant in the liquid state to the suction of the compressor or compressors to be prevented or limited.

13. Reversible system according to any one of the previous claims, **characterized in that** the phase separator (S) is a dip tube in a liquid fluid reserve.

14. Reversible system according to the previous claim, **characterized in that** the section of the phase separator (S) dip tube is larger than the input conduit to optimize thermal exchanges and to allow evaporation of the last drops of refrigerant contained in the low-pressure gaseous fluid.

15. Reversible system according to any one of the previous claims, **characterized in that** the main compressor (CP) has priority, the secondary compressor or compressors (CS) being called as a supplement.

16. Reversible system according to any one of the previous claims, **characterized in that** the size and characteristics of the main compressor (CP) are such, for a given installation, that the main compressor is not too powerful in summer, and is supplemented by one or more secondary compressors (CS) in winter.

17. Reversible system according to any one of the previous claims, **characterized in that** the main compressor (CP) is the only compressor of the installation, the energy possibly being supplemented by a contribution of heat energy coming from another means.

18. Reversible system according to any one of the previous claims, **characterized in that** the main exchanger (EP) is used as a desuperheater with partial or total condensation.

## Patentansprüche

1. Umschaltbares System zur Rückführung und Weiterleitung von Kalorien mit hoher Leistung für die Erhitzung des Sanitärwassers, des Wassers eines Schwimmbeckens und die Erhitzung und Klimatisierung der Räume, Büros und Lokale oder anderen Orte, die eine Wärmepumpe einsetzen, umfassend einen Kühlkreis, in dem ein Kühlfluid im flüssigen oder gasförmigen Zustand zirkuliert, der von einem äußeren umschaltbaren Wärmetauscher mit einem externen Medium zur Entnahme oder Lieferung von Kalorien, mindestens einem Kompressor (CP, CS), mindestens einem Druckminderer (D1, D2, D3) und verschiedenen Verwendungsschaltungen von inneren Wärmetauschern gebildet ist, wobei das umschaltbare System zur Rückführung und Weiterleitung von Kalorien mit hoher Leistung **dadurch gekennzeichnet ist, dass** es ebenfalls umfasst:
mindestens einen Hauptkompressor (CP), der im Bedarfsfalle durch mindestens einen Nebenkompressor (CS) ergänzt wird, der als Ablöse für den Hauptkompressor (CP) verwendet wird;
einen nicht umschaltbaren inneren Hauptwärmetauscher (EP), für die Erhitzung des Sanitärwassers, der am Ausgang des Hauptkompressors (CP) angeordnet ist;
innere Nebenwärmetauscher (ES1, ES2, ES3), die in Stufen angeordnet sind, darunter mindestens ein umschaltbarer Wärmetauscher für die Lieferung oder die Entnahme von Kalorien an oder von einer Verwendungsschaltung,
einen Druckminderungs- und Trennblock (BDS), umfassend einen Phasentrenner (S), der die Funktionen einer Antistoßheberflasche, eines Wärmetauschers zwischen der Hochdruckflüssigkeit und dem Niederdruckgas, eine Funktion eines Zweistromflüssigkeitsbehälters vereint, und dann mindestens zwei Druckminderer, darunter ein Druckminderer (D3) für den Winterbetrieb und schließlich mindestens ein weiterer Druckminderer (D1) oder (D2) für den umgekehrten Sommerbetrieb,
einen äußeren umschaltbaren Wärmetauscher (EA), der in der Kühlschaltung als Quelle oder Ableitung von Kalorien und in einem externen Medium zur Entnahme oder Lieferung von Kalorien angeordnet ist,
eine Vielzahl von geeichten Ventilen (VCn), die ferngesteuert sind, um die Zweige von Schaltungen im Hinblick auf den umschaltbaren Betrieb zu isolieren.

2. Umschaltbares System nach Anspruch 1, **dadurch gekennzeichnet, dass** der Druckminderer (D3) ein thermostatischer Druckminderer mit externem Ausgleich ist, dessen thermosensibles Element oder Kugel (B3) mit der Leitung, die Kompressoren mit Kühlfluid versorgt, in Kontakt angeordnet ist und durch einen elektrischen Widerstand (R) erhitzt wird, der von einem Wärmefühler (ThR) gesteuert wird, wenn die Temperatur des Kühlfluids am Ausgang des Hauptkompressors (CP) größer als ein gewisser Sollwert ist.

3. Umschaltbares System nach dem vorhergehenden Anspruch, **dadurch gekennzeichnet, dass** der Sollwert der Steuerung des thermostatischen Druckminderers (D3) durch den Widerstand (R) ungefähr 90 °C beträgt.

4. Umschaltbares System nach einem der vorhergehenden Ansprüche, **dadurch gekennzeichnet, dass** die Nebenschaltung des Hauptwärmetauschers (EP) eine Schaltung zur Erhitzung des Sanitärwassers in einem Ballon (BEC) versorgt.

5. Umschaltbares System nach dem vorhergehenden Anspruch, **dadurch gekennzeichnet, dass** die Schaltung zur Erhitzung des Sanitärheizwassers (BEC) ein einstellbares thermostatisches Ventil (VTA), das von der Temperatur des Sanitärwarmwassers gesteuert wird, und eine Zirkulationsschaltung (P4) umfasst, wobei die Schaltung den Ballon (BEC) durchquert.

6. Umschaltbares System nach dem vorhergehenden Anspruch, **dadurch gekennzeichnet, dass** das Ventil (VTA) von einem Wärmefühler gesteuert wird, der die Temperatur des Sanitärwassers im Ballon (BEC) misst.

7. Umschaltbares System nach einem der vorhergehenden Ansprüche, **dadurch gekennzeichnet, dass** der äußere Wärmetauscher ein Luftwärmetauscher (EA) ist, der in dem Luftstrom angeordnet ist, der von einem Ventilator (VE) erzeugt wird.

8. Umschaltbares System nach dem vorhergehenden Anspruch, **dadurch gekennzeichnet, dass** der Temperaturunterschied des Luftstroms vor und nach dem Wärmetauscher (EA) gering ist.

9. Umschaltbares System nach dem vorhergehenden Anspruch, **dadurch gekennzeichnet, dass** der Temperaturunterschied des Luftstroms ungefähr einige Grad Zentigrad beträgt.

10. Umschaltbares System nach einem der Ansprüche 7 bis 9, **dadurch gekennzeichnet, dass** der Luftwärmetauscher (EA) ein umschaltbarer Wärmetauscher ist, der je nach Fall einen Verdampfer oder Kondensator darstellt.

11. Umschaltbares System nach einem der Ansprüche 7 bis 10, **dadurch gekennzeichnet, dass** der Luftwärmetauscher im Winter als versenkter Verdampfer verwendet wird.

12. Umschaltbares System nach einem der vorhergehenden Ansprüche, **dadurch gekennzeichnet, dass** der Phasentrenner (S) von derartiger Größe und Ausführung ist, dass er eine Wärmeträgheit aufweist, die es ermöglicht, die Zuleitungen von Kühlfluid im flüssigen Zustand bei der Ansaugung des oder der Kompressoren zu verhindern oder zu begrenzen.

13. Umschaltbares System nach einem der vorhergehenden Ansprüche, **dadurch gekennzeichnet, dass** der Phasentrenner (S) mit Tauchrohr in eine Flüssigkeitsreserve ist.

14. Umschaltbares System nach dem vorhergehenden Anspruch, **dadurch gekennzeichnet, dass** der Querschnitt des Tauchrohrs des Phasentrenners (S) größer als die Zuleitung ist, um den Wärmeaustausch zu optimieren und die Verdampfung der letzten Tropfen von Kühlfluid, die in dem gasförmigen Niederdruckfluid enthalten sind, zu ermöglichen.

15. Umschaltbares System nach einem der vorhergehenden Ansprüche, **dadurch gekennzeichnet, dass** der Hauptkompressor (CP) vorrangig ist, wobei der oder die Nebenkompressor(en) (CS) ergänzend genannt werden.

16. Umschaltbares System nach einem der vorhergehenden Ansprüche, **dadurch gekennzeichnet, dass** die Größe und die Merkmale des Hauptkompressors (CP) derart sind, dass er bei einer gegebenen Installation im Sommer nicht überstark ist, wobei er im Winter durch einen oder mehrere Hauptkompressor(en) ergänzt wird.

17. Umschaltbares System nach einem der vorhergehenden Ansprüche, **dadurch gekennzeichnet, dass** der Hauptkompressor (CP) der einzige Kompressor Installation ist, wobei die Energie eventuell durch eine Zufuhr von wärmeenergie, die von einem anderen Mittel kommt, ergänzt wird.

18. Umschaltbares System nach einem der vorhergehenden Ansprüche, **dadurch gekennzeichnet, dass** der Hauptwärmetauscher (EP) als Entüberhitzer mit teilweiser oder völliger Kondensation verwendet wird.
